Europäisches Patentamt

European Patent Office

Office européen des brevets

(19)

(11) Veröffentlichungsnummer: **0 124 650**
**A2**

(12) # EUROPÄISCHE PATENTANMELDUNG

(21) Anmeldenummer: 83112636.2

(22) Anmeldetag: 15.12.83

(51) Int. Cl.³: **B 27 F 1/08**

(30) Priorität: 17.12.82 DE 3246882

(43) Veröffentlichungstag der Anmeldung:
14.11.84 Patentblatt 84/46

(84) Benannte Vertragsstaaten:
AT BE CH DE FR GB IT LI NL SE

(71) Anmelder: HARBS KOMMANDITGESELLSCHAFT
Rendsburger Landstrasse 329
D-2300 Kiel 1(DE)

(72) Erfinder: Harbs, Alfred, Dipl.-Ing.
Rendsburger Landstrasse 329
D-2300 Kiel 1(DE)

(74) Vertreter: Glawe, Delfs, Moll & Partner Patentanwälte
Postfach 26 01 62 Liebherrstrasse 20
D-8000 München 26(DE)

(54) Holzbearbeitungsmaschine zum beidendigen Bearbeiten von länglichen Holzwerkstücken.

(57) Holzbearbeitungsmaschine zum beidendigen Bearbeiten von länglichen Holzwerkstücken, insbesondere Profilhölzern wie Flügel- und Rahmenhölzer von Fenstern, mit einer Werkstück-Transportbahn, in welcher ein an einer Aufgabestelle eingegebenes Werkstück von Mitnehmern und daran vorgesehenen steuerbaren Spanneinrichtungen erfaßbar und in einer quer zu der Länge des Werkstücks verlaufenden Transportrichtung an beiderseits der Transportbahn angeordneten Sätzen von Holzbearbeitungsstationen, die je wenigstens ein Werkzeug aufweisen, entlangbewegbar ist. Die Erfindung vereinfacht eine solche Maschine und deren Benutzung dadurch, daß der auf der einen Seite der Transportbahn liegende erste Satz von Bearbeitungsstationen gegen den auf der anderen Seite liegenden zweiten Satz von Bearbeitungsstationen in der Transportrichtung versetzt ist, daß zwischen den Sätzen der Bearbeitungsstationen eine Quertransportstation vorgesehen ist, in welcher ein dort befindliches Werkstück quer zu der Transportrichtung bis zu einem auf der Seite des ersten Satzes einstellbar angeordneten Anschlag in eine zweite Arbeitsposition verschiebbar ist, in welcher beim Weitertransport des Werkstücks der zweite Satz von Bearbeitungsstationen mit dem anderen Ende des Werkstücks in Eingriff bringbar ist.

Harbs KG,

Kiel

Holzbearbeitungsmaschine zum
beidendigen Bearbeiten von
länglichen Holzwerkstücken

p 11053/83 EU

## Beschreibung

Die Erfindung betrifft eine Holzbearbeitungsmaschine zum
beidseitigen Bearbeiten von länglichen Holzwerkstücken,
insbesondere Profilhölzern wie Flügel- und Rahmenhölzer
von Fenstern, mit einer Werkstück-Transportbahn, in welcher
ein an einer Aufgabestelle aufgegebenes Werkstück von Mitnehmern und daran vorgesehenen steuerbaren Spanneinrichtungen
erfaßbar und in einer quer zu der Länge des Werkstückes verlaufenden Transportrichtung an beiderseits der Transportbahn angeordneten Sätzen von Holzbearbeitungsstationen, die
je wenigstens ein Holzbearbeitungswerkzeug aufweisen, entlangbewegbar ist, wobei die Transportbahn vorzugsweise ein
umlaufendes Transportband mit darauf verteilten Mitnehmern
aufweist.

Maschinen der eingangs angegebenen Art gehören zum internen
Stand der Technik der Anmelderin. Wenn bei derartigen
Maschinen Holzwerkstücke verschiedener Länge zu bearbeiten
sind, wird der quer zur Transportbahn gemessene Abstand

... 2

zwischen den beiden Sätzen von Holzbearbeitungsstationen entsprechend verändert. Wegen des beträchtlichen Gewichts der
Holzbearbeitungswerkzeuge ist dafür ein beträchtlicher
Arbeitsaufwand erforderlich. Meist wird gleichzeitig auch
die Breite der Transportbahn entsprechend verstellt; auch
dies erfordert einen beträchtlichen Arbeitsaufwand. Die
Konstruktion derartiger Maschinen muß wegen der vorzusehenden
Verstellmöglichkeiten entsprechend aufwendig sein.

Die vorliegende Erfindung geht von der Aufgabe aus, eine
Holzbearbeitungsmaschine zum beidendigen Bearbeiten von
länglichen Holzwerkstücken zu schaffen, bei der die zum
Einstellen auf verschiedene Werkstücklängen erforderlichen
Maßnahmen vereinfacht sind.

Nach der Erfindung wird diese Aufgabe gelöst mit einer
Holzbearbeitungsmaschine der eingangs angegebenen Art, die
dadurch gekennzeichnet ist, daß der auf der einen Seite
der Transportbahn liegende erste Satz von Bearbeitungsstationen
gegen den auf der anderen Seite liegenden zweiten Satz von
Bearbeitungsstationen in der Transportrichtung versetzt ist,
und daß zwischen den Sätzen der Bearbeitungsstationen eine
Quertransportstation vorgesehen ist, in welcher ein dort
befindliches Werkstück quer zu der Transportrichtung bis
zu einem auf der Seite des ersten Satzes einstellbar angeordneten Anschlag in eine zweite Arbeitsposition verschiebar ist, in welcher beim Weitertransport des Werkstückes der zweite Satz von Bearbeitungsstationen mit dem
anderen Ende des Werkstückes in Eingriff bringbar ist.

Bei der erfindungsgemäßen Holzbearbeitungsmaschine braucht
somit bei der Umstellung auf eine andere Werkstück-Länge

... 3

lediglich der an der Quertransportstation vorgesehene Anschlag entsprechend verstellt zu werden; dafür sind nur sehr
einfache bauliche Mittel und nur sehr einfache Arbeitsschritte erforderlich, so daß der Wechsel zu einer anderen
Werkstücklänge in sehr kurzer  Zeit mit geringstem Aufwand erfolgen kann. Es kann sogar der einstellbare Anschlag
während der Bearbeitung unterschiedlich langer Werkstücke
verstellbar sein, so daß die Umstellung auf eine andere
Werkstücklänge keine ins Gewicht fallende Stillstandszeit
der Maschine erfordert. Ein weiterer Vorteil der erfindungsgemäßen Maschine besteht darin, daß die Transportbahn eine
feste Breite haben kann; dann entfällt auch der Aufwand
für eine Breiten-Einstellbarkeit der Transportbahn.

Bei der erfindungsgemäßen Maschine dann somit ein zu bearbeitendes Werkstück eine erheblich größere Breite haben
als die Transportbahn; es wird zunächst von dem ersten Satz
der Bearbeitungsstationen am einen Ende bearbeitet, dann
in der Quertransportstation so weit quer zur Transportbahn
verschoben  , daß sein anderes Ende von dem zweiten Satz
der Bearbeitungsstationen erfaßt werden kann, und dann in
der Transportbahn weiterbewegt und dadurch von den zweiten
Bearbeitungsstationen am anderen Ende bearbeitet. Der ganze
Vorgang erfordert nur eine einzige geradlinig verlaufende
Transportbahn; auch das trägt zur Einfachheit des Aufbaus
der erfindungsgemäßen Maschine wesentlich bei. Im Gegensatz zu den eingangs beschriebenen vorbekannten Maschinen ist
es nicht erforderlich, bei einer Änderung der Werkstücklänge
die Holzbearbeitungsmaschine leerzufahren und die eine Seite
der Maschine (einen Satz der Bearbeitungsstationen und ggf.
auch eine Seite der Transportbahn) auf das neue Längenmaß
zu verfahren. Sowohl das Leerfahren der Maschine als auch
die Verstellarbeiten sind unproduktive Nebenzeiten, die

... 4

bei der erfindungsgemäßen Maschine nicht mehr erforderlich
sind.

Normalerweise ist bei der erfindungsgemäßen Maschine ebenso
wie bei den bekannten Maschinen in der Transportbahn eine
Reihe von mit gegenseitigen Abständen angeordneten Mitnehmern
für je ein Werkstück in der Transportrichtung bewegbar. Damit sich die Vorgänge des Quer-Verschiebens der Werkstücke in
der Quertransportstation und des End-Bearbeitens in den Bearbeitungsstationen nicht gegenseitig stören können, ist es
zweckmäßig, daß die Quertransporteinrichtung an einer Stelle
der Transportbahn angeordnet ist, an welcher bei Anwesenheit
eines Werkstückes die anderen Werkstücke von Bearbeitungsstationen frei sind.

Die Erfindung wird im folgenden anhand eines Ausführungsbeispiels in Verbindung mit den Zeichnungen näher beschrieben.
Es zeigt:

Fig. 1      eine schematische Seitenansicht einer erfindungsgemäßen Maschine,

Fig. 2      eine schematische Draufsicht auf die Maschine,

Fig. 3      eine im Vergleich zu Fig. 1 vergrößerte und mit
            mehr Einzelheiten dargestellte schematische Seitenansicht eines Mitnehmers,

Fig. 4      eine der Fig. 3 entsprechende schematische Seitenansicht des Mitnehmers mit einem davon erfaßten
            Werkstück, und

Fig. 5      eine der Fig. 4 entsprechende Darstellung einer
            anderen Ausführungsform eines Mitnehmers.

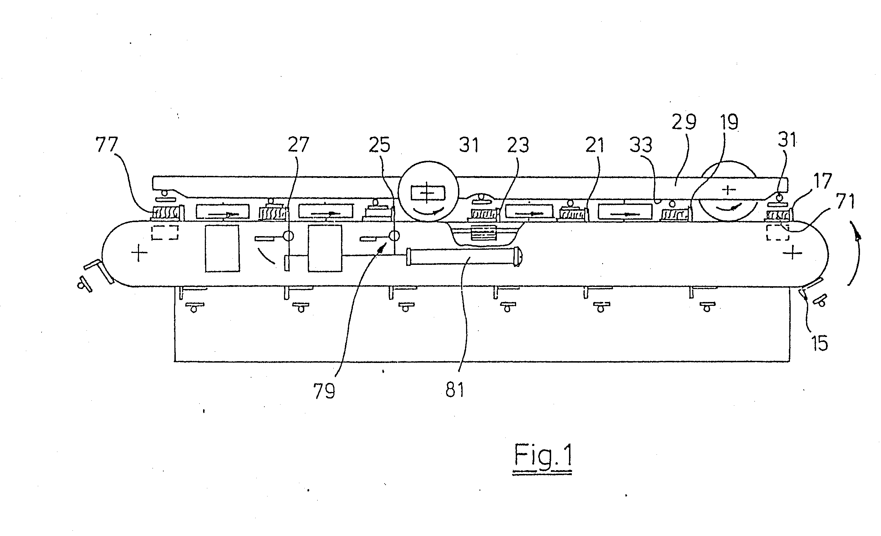

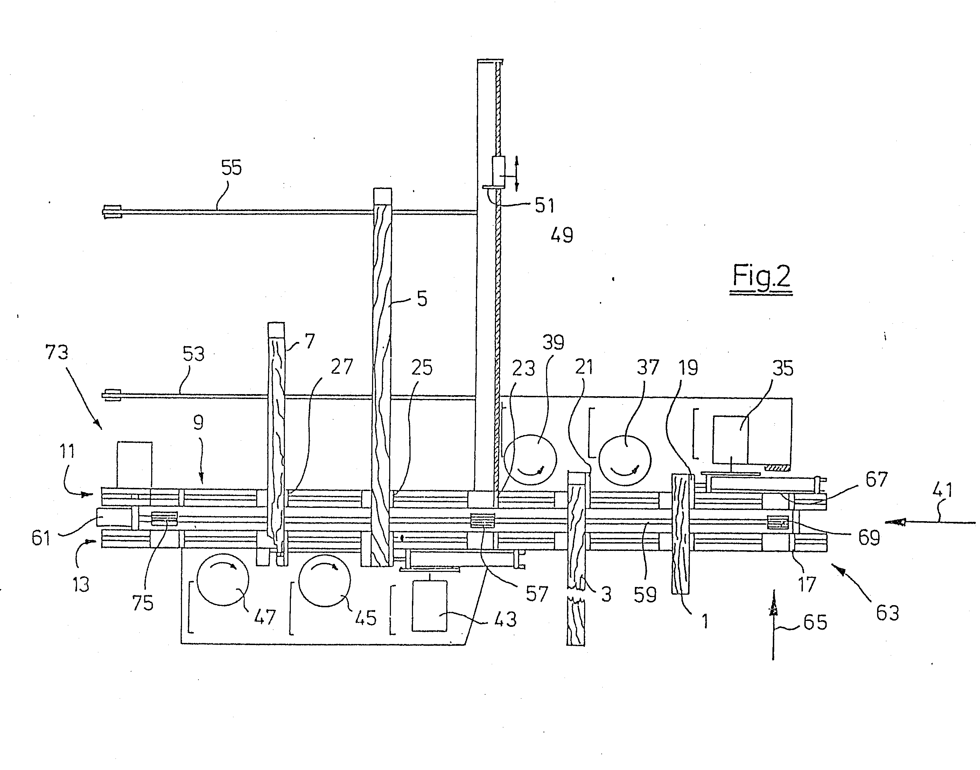

Die in den Fig. 1 und 2 dargestellte Maschine dient zum beidendigen Bearbeiten von länglichen Holzwerkstücken 1, 3, 5, 7. Die Maschine hat eine Werkstück-Transportbahn 9 mit zwei umlaufenden Transportbändern 11, 13 und darauf verteilten Mitnehmern, z.B. 15, 17, 19, 21, 23, 25, 27. Die Mitnehmer haben Spanneinrichtungen für die Holzbearbeitungswerkstücke. Die Spanneinrichtungen sind steuerbar, beispielsweise wie dargestellt mittels einer Druckschiene 29, die ein mit Betätigungsorganen 31 der Spanneinrichtungen zusammenwirkendes Steuerprofil 33 aufweist.

Auf der einen Seite der Transportbahn 9 ist ein erster Satz von Holzbearbeitungsstationen 35, 37, 39 vorgesehen. Bei dem dargestellten Ausführungsbeispiel ist angenommen, daß in der Station 35 eine Abkürzsäge vorliegt, während die Stationen 37 und 39 Endprofilierungs-Werkzeuge enthalten. Auf der anderen Seite der Transportbahn 9 ist ein zweiter Satz von Holzbearbeitungsstationen 43, 45, 47 vorgesehen, und bei dem dargestellten Ausführungsbeispiel ist wieder angenommen, daß die Station 43 eine Abkürzsäge enthält und die Stationen 45 und 47 Profilierungswerkzeuge enthalten. Durch einen nicht dargestellten Antrieb werden die Werkstücke in der Transportrichtung 41 an den Sätzen der Holzbearbeitungsstationen entlangbewegt und dadurch bearbeitet. Der erste Satz 35, 37, 39 ist gegen den auf der anderen Seite der Transportbahn 9 liegenden zweiten Satz 43, 45, 47 versetzt, und zwischen den beiden Sätzen ist eine Quertransportstation 49 vorgesehen, in welcher ein dort befindliches Werkstück quer zu der Transportrichtung 41 bis zu einem Anschlag 51 in eine zweite Arbeitsposition verschiebbar ist, in welcher beim anschließenden Transport das andere Ende des Werkstückes mit dem zweiten Satz von Bearbeitungsstationen 43, 45, 47 in Eingriff kommt. Der Anschlag 51 liegt auf der Seite der Transportbahn 9, wo sich der erste Satz von Bearbeitungsstationen 37, 39 befindet. Der Anschlag 51 ist
quer zur Transportbahn 9 einstellbar. Dadurch kann die
Maschine leicht auf Werkstücke verschiedener Länge umgestellt werden. Damit verhältnismäßig lange Werkstücke ausreichend abgestützt sind, können in seitlichen Abständen
von der Transportbahn 9 Auflageschienen 53, 55 vorgesehen
sein. Bei der dargestellten Ausführungsform hat die Transportbahn 9 eine feste Breite, und die beiden Sätze von Bearbeitungsstationen sind nicht für gegenseitige Verstellung eingerichtet.
Es kann sich aber um Werkzeuge handeln, die wahlweise in und
außer Eingriff mit den vorbeibewegten Werkstücken bringbar sind.

Wie aus Fig. 2 zu erkennen ist, ist die Quertransporteinrichtung 49 an einer Stelle der Transportbahn 9 angeordnet,
in welcher bei Anwesenheit eines Werkstückes (in den Figuren
nicht dargestellt) die anderen Werkstücke 1, 3, 5, 7 von den
Bearbeitungsstationen 37, 39, 43, 45, 47 frei sind. Dadurch
können die Bearbeitungsvorgänge ungestört von dem Querverschieben der Werkstücke vor sich gehen.

Die Quertransporteinrichtung 49 weist eine Quertransportrolle 57
auf, die über eine Welle 59 von einem Antrieb 61 antreibbar ist
und von einer nicht dargestellten Vorrichtung steuerbar an ein
dort befindliches (in den Figuren nicht dargestelltes) Werkstück, das von seiner Spanneinrichtung freigegeben ist, andrückbar ist; dadurch wird in hier einfacher Weise das Werkstück
quer zur Transportrichtung 41 bis zu dem Anschlag 51 bewegt.

Die Werkstücke werden an einer am Anfang der Bearbeitungsbahn
9 liegenden Aufgabestelle mittels einer nicht dargestellten
Werkstück-Zuführeinrichtung mit quer zur Transportrichtung 41
verlaufender Zuführrichtung 65 bis zu einem Anschlag 67 zugeführt, wenn sich gerade Mitnehmer 17 an der Aufgabestelle 63
befindet. Um das zugeführte Werkzeug in einfacher Weise bis bis zum Anschlag 67 vorbewegen zu können, ist an der Aufgabestelle 63 eine antreibbare zweite Quertransportrolle 69 vorgesehen, die mittels einer nicht dargestellten Andrückvorrichtung
an das quer heranbewegte Werkstück 71 (nur in Fig. 1 dargestellt)
andrückbar ist. Die nicht dargestellte Zuführeinrichtung weist
im einfachsten Fall ein quer zu der Transportrichtung 41 verlaufendes antreibbares Zuführband (nicht dargestellt) auf.

Am Ende der Bearbeitungsstrecke ist an der Transportbahn 9
eine Entnahmestelle 73 vorgesehen. Bei der dargestellten
Ausführungsform wird das fertig bearbeitete Werkstück in
sehr einfacher Weise aus der Maschine quer zu der Transportrichtung 41 wieder ausgegeben mit Hilfe einer antreibbaren
dritten Querantriebsrolle 75, die an das quer aus der Maschine
auszugebende Werkstück 77 (nur in Fig. 1 dargestellt) andrückbar ist. Diese Ausgabeeinrichtung ist baulich einfach und betriebssicher. Eine weitere starke Vereinfachung ergibt sich
bei der dargestellten Ausführungsform dadurch, daß die Quertransportrollen 57, 69, 75 auf einer gemeinsamen Welle 59
angeordnet und gemeinsam antreibbar sind. Ferner ist vorteilhaft, daß die Querantriebsrollen innerhalb der Transportbahn 9
angeordnet sind, also keinen zusätzlichen Platz benötigen.

Wegen des einfachen Aufbaus der erfindungsgemäßen Maschine,
insbesondere wegen der geradlinigen Transportbahn 9, können
leicht irgendwelche Zusatzeinrichtungen angebracht werden.
In den Figuren ist als Beispiel dafür eine Konterholz-Zuführeinrichtung 79 angedeutet. Diese dient zum Zuführen von
Vorrat zum Konterhölzern zu und von den Mitnehmern. Bei der
dargestellten Ausführungsform enthält die Konterholz-Zuführeinrichtung 79 einen Schubzylinder 81, der das jeweils zugeführte Konterholz während der Bearbeitung an dem betreffenden
Werkstück festhält. Nach der Bearbeitung geht der Schubzylinder in seine Ausgangsstellung zurück. Eine weitere vorteilhafte Zusatzeinrichtung kann darin bestehen, daß ein Werkzeug-Magazin und ein zwischen dem Magazin und wenigstens einer der Bearbeitungsstationen wirksame Werkzeug-Transfereinrichtung aufweist. Diese Teile sind in den Figuren nicht dargestellt.

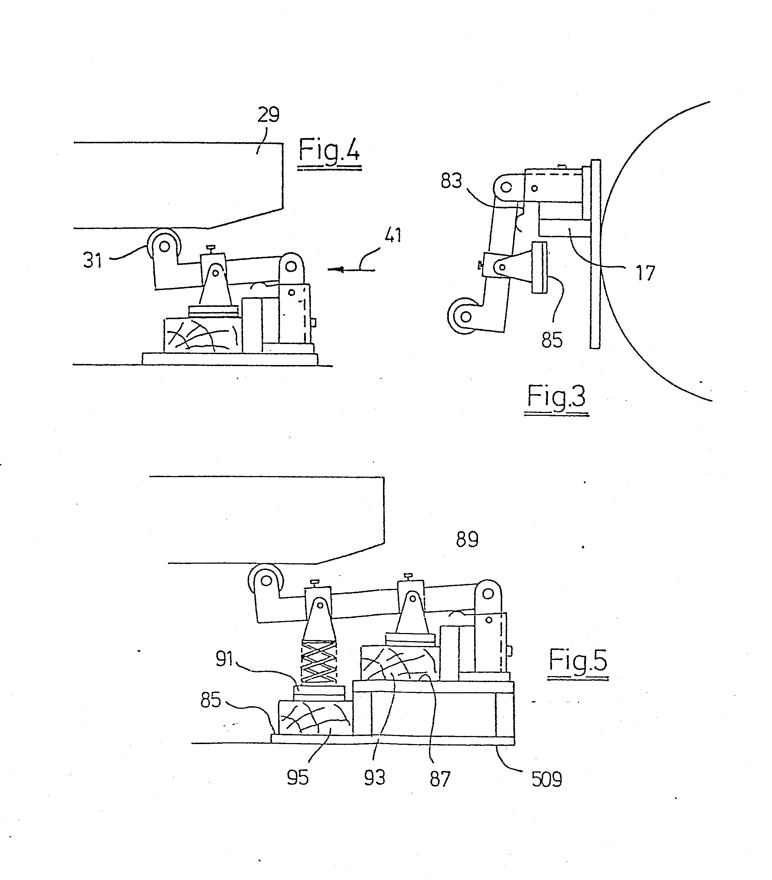

Fig. 3 zeigt einen Mitnehmer 17 mit einer Werkstück-Spanneinrichtung. Diese enthält einen mittels einer Feder 83 in die Offenstellung vorgespannten Stempel 85, der mittels des schon beschriebenen Betätigungselements 31, hier in Form einer Andrückrolle, nach unten in eine das Werkstück festspannende Position bewegbar ist. Fig. 4 zeigt diesen Zustand. Dabei ist der auf der Transportbahn 9 in der Transportrichtung 41 weiterbewegte Mitnehmer in den Bereich der Druckschiene 13 gelangt, die das Betätigungselement 31 herunterdrückt.

Fig. 5 zeigt eine Ausgestaltung, bei welcher das (nicht dargestellte) Zuführband an der Aufgabestelle und die Transportbahn 509 mehrere Tranportebenen aufweisen, bei dem dargestellten Beispiel zwei Transportebenen 85 und 87. Die an dem Mitnehmer befindliche Werkstück-Spanneinrichtung ist in diesem Fall so ausgebildet, daß sie gemeinsam betätigbare Spannelemente 89, 91 für die in mehreren Ebenen befindlichen Werkstücke 93, 95 aufweist. Es versteht sich, daß dann die Maschine an wenigstens einer der Bearbeitungsstationen mehrere Werkzeuge entsprechend den verschiedenen Ebenen aufweist.

Die Arbeitsweise der beschriebenen Vorrichtung ergibt sich ohne weiteres aus der vorstehenden Beschreibung. Man erkennt ohne weiteres, daß eine Reihe von zu bearbeitenden Werkstücken nacheinander während kurzer Stillstandszeiten der Transportbahn 9 in der Quertransporteinrichtung 49 jeweils

... 9

so weit quer vorschoben werden, daß sie danach von dem zweiten
Satz der Bearbeitungsstationen erfaßt werden können. Während
dieser Querbewegungen sind jeweils die übrigen Werkstücke
außer Eingriff mit den Bearbeitungsstationen. Auf diese Weise
kann eine beliebige Reihe von Werkstücken verschiedener Längen
automatisch in kürzester Zeit beidendig bearbeitet, beispielsweise profiliert werden.

Patentansprüche

1. Holzbearbeitungsmaschine zum beidendigen Bearbeiten von länglichen Holzwerkstücken, insbesondere Profilhölzern wie Flügel- und Rahmenhölzer von Fenstern, mit einer Werkstück-Transportbahn, in welcher ein an einer Aufgabestelle eingegebenes Werkstück von Mitnehmern und daran vorgesehenen steuerbaren Spanneinrichtungen erfaßbar und in einer quer zu der Länge des Werkstücks verlaufenden Transportrichtung an beiderseits der Transportbahn angeordneten Sätzen von Holzbearbeitungsstationen, die je wenigstens ein Werkzeug aufweisen, entlangbewegbar ist, wobei die Transportbahn vorzugsweise ein umlaufendes Transportband mit darauf verteilten Mitnehmern aufweist, dadurch gekennzeichnet, daß der auf der einen Seite der Transportbahn (9) liegende erste Satz von Bearbeitungsstationen (35, 37, 39) gegen den auf der anderen Seite liegenden zweite Satz von Bearbeitungsstationen (43, 45, 47) in der Transportrichtung (41) versetzt ist, daß zwischen den Sätzen der Bearbeitungsstationen eine Quertransportstation (49) vorgesehen ist, in welcher ein dort befindliches Werkstück quer zu der Transportrichtung bis zu einem auf der Seite des ersten Satzes einstellbar angeordneten Anschlag (51) in eine zweite Arbeitsposition verschiebar ist, in welcher beim Weitertransport des Werkstücks der zweite Satz von Bearbeitungsstationen mit dem anderen Ende des Werkstücks in Eingriff bringbar ist.

2. Vorrichtung nach Anspruch 1, dadurch gekennzeichnet, daß der einstellbare Anschlag (51) während der Bearbeitung unterschiedlich langer Werkstücke verstellbar ist.

3. Vorrichtung nach Anspruch 1 oder 2, dadurch gekennzeichnet, daß die Transportbahn (9) eine feste Breite hat.

4. Vorrichtung nach Anspruch 1 oder 2, bei der in der Transportbahn eine Reihe von Mitnehmern mit gegenseitigen Abständen für je ein Werkstück bewegbar ist, dadurch gekennzeichnet, daß die Quertransporteinrichtung (49) an einer Stelle der Transportbahn (9) angeordnet ist, an welcher bei Anwesenheit eines Werkstücks die anderen Werkstücke von den Bearbeitungsstationen frei sind.

5. Vorrichtung nach einem der vorhergehenden Ansprüche, dadurch gekennzeichnet, daß die Quertransporteinrichtung (49) eine antreibbare Quertransportrolle (57) aufweist, die an ein dort befindliches und von seiner Spanneinrichtung freigegebenes Werkstück andrückbar ist.

6. Vorrichtung nach einem der vorhergehenden Ansprüche, dadurch gekennzeichnet, daß an der Aufgabestelle (63) eine Werkstück-Zuführeinrichtung mit quer zur Transportrichtung verlaufender Zuführrichtung (65) vorgesehen ist.

7. Vorrichtung nach Anspruch 6, dadurch gekennzeichnet, daß an der Aufgabestelle (63) eine antreibbare zweite Quertransportrolle (69) vorgesehen ist, die an ein quer heranbewegtes Werkstück andrückbar ist.

8. Vorrichtung nach Anspruch 6 oder 7, dadurch gekennzeichnet, daß die Zuführeinrichtung ein quer zu der Transportrichtung (41) verlaufendes antreibbares Zuführband aufweist.

9. Vorrichtung nach Anspruch 8, dadurch gekennzeichnet, daß das Zuführband (509) und die Mitnehmer mehrere Transportebenen (85, 87) aufweisen.

10. Vorrichtung nach Anspruch 9, dadurch gekennzeichnet, daß die an den Mitnehmern befindlichen Spanneinrichtungen jeweils gemeinsam betätigbare Spannelemente für in mehreren Ebenen befindliche Werkstücke (93, 95) aufweist.

11. Vorrichtung nach Anspruch 9 oder 10, dadurch gekennzeichnet, daß wenigstens eine Bearbeitungsstation mehrere Werkzeuge entsprechend den verschiedenen Ebenen aufweist.

12. Vorrichtung nach einem der vorhergehenden Ansprüche, dadurch gekennzeichnet, daß an einer Entnahmestelle (73) eine antreibbare dritte Quertransportrolle (75) vorgesehen ist, die an ein quer aus der Maschine auszugebendes Werkstück andrückbar ist.

13. Vorrichtung nach Anspruch 7 oder 12, dadurch gekennzeichnet, daß die Querantriebsrollen auf einer gemeinsamen Welle (59) angeordnet und gemeinsam antreibbar sind.

14. Vorrichtung nach einem der Ansprüche 5 bis 13, dadurch gekennzeichnet, daß die Querantriebsrollen innerhalb der Transportbahn (9) angeordnet sind.

15. Vorrichtung nach einem der vorhergehenden Ansprüche, gekennzeichnet durch eine Konterholz-Zuführeinrichtung

0124650

zum Zuführen von bevorrateten Konterhölzern zu und von den Mitnehmern.

16. Vorrichtung nach einem der vorhergehenden Ansprüche, dadurch gekennzeichnet, daß sie ein Werkzeug-Magazin und eine zwischen diesem und wenigstens einer Bearbeitungsstation wirksame Werkzeug-Transfereinrichtung aufweist.

Fig.1

Fig.2

29

## Fig.4

31

41

83

17

85

## Fig.3

89

91

85

95   93   87   509

## Fig.5